# NEUE EUROPÄISCHE PATENTSCHRIFT

(11) **EP 1 688 807 B2**
(45) Veröffentlichungstag und Bekanntmachung des Hinweises auf die Entscheidung über den Einspruch: **18.06.2014**
(45) Hinweis auf die Patenterteilung: 16.07.2008
(21) Anmeldenummer: 05002414.0
(22) Anmeldetag: 04.02.2005
(51) Int. Cl.: G05B 19/39

(54) **Verfahren zur Bewegungsaufteilung einer Relativbewegung zwischen einem Werkstück und einem Werkzeug einer Werkzeugmaschine**
Method to divide the relative movement between a workpiece and a tool of a machine tool
Méthode pour la répartition du mouvement relatif entre une pièce et l'outil d'une machine outil

(43) Veröffentlichungstag der Anmeldung: 09.08.2006
(73) Patentinhaber: TRUMPF Werkzeugmaschinen GmbH + Co. KG, 71254 Ditzingen (DE)
(72) Erfinder: Scholich-Tessmann, Wolfgang, Dr., 71032 Böblingen (DE)
(74) Vertreter: Kohler Schmid Möbus

(56) Entgegenhaltungen:
- EP-A- 1 366 846
- US-A- 5 109 148
- US-A- 5 574 348
- US-A- 5 801 939
- STAROSELSKY S ET AL INSTITUTE OF ELECTRICAL AND ELECTRONICS ENGINEERS AMERICAN AUTOMATIC CONTROL COUNCIL: "TWO-STAGE ACTUATION FOR IMPROVED ACCURACY OF CONTOURING" PROCEEDINGS OF THE AMERICAN CONTROL CONFERENCE. ATLANTA, JUNE 15 - 17, 1988, NEW YORK, IEEE, US, Bd. VOL. 1 CONF. 7, 15. Juni 1988 (1988-06-15), Seiten 127-132, XP000012249

## Beschreibung

Die Erfindung betrifft ein Verfahren zur Bewegungsaufteilung mit den Merkmalen des Oberbegriffs von Anspruch 1 Außerdem betrifft die Erfindung vorrichtungsmäßig eine Werkzeugmaschine mit den Merkmalen des Oberbegriffs des Anspruchs 5.

Ein derartiges Verfahren und eine derartige Werkzeugmaschine sind beispielsweise aus der EP 0 594 699 B1 bekannt geworden.

Bei der Bearbeitung von Werkstücken auf Werkzeugmaschinen besteht zum einen die Möglichkeit, das Werkstück über einen geeigneten Antrieb relativ zu einem Werkzeug zu bewegen, um die Werkstückbearbeitung durchzuführen. Alternativ ist es möglich und gebräuchlicher, das Werkzeug relativ zum Werkstück zu bewegen. Dabei müssen geringere Massen bewegt werden als bei der Bewegung des Werkstückes. Jedoch selbst die Bewegung des Werkzeuges erfährt Grenzen, wenn dieses beispielsweise an einem Portal befestigt ist, das über dem Werkstück bewegt wird. Auch ein solches Portal weist ein relativ hohes Gewicht auf, so dass keine allzu hohe Dynamik bei ausreichender Genauigkeit gefahren werden kann. Deshalb bietet es sich an, einen zusätzlichen in Richtung des Werkstück- oder Werkzeugantriebs wirkenden höher dynamischen Antrieb vorzusehen, durch den nur sehr geringe Gewichte bewegt werden müssen. Dadurch lässt sich eine höhere Dynamik und höhere Präzision erreichen. So kann beispielsweise an einem in Y-Richtung über einen Antrieb verfahrbaren Portal ein Werkzeughalter vorgesehen sein, der entlang des Portals über einen zweiten Antrieb ein kurzes Stück in Y-Richtung verfahrbar ist. Ein am Werkzeughalter gehaltenes Werkzeug ist dadurch über zwei Antriebe in Y-Richtung verfahrbar. Häufig wird der erste das Portal antreibende Antrieb abkürzend als Maschinenachse und der zweite, höher dynamische Antrieb, als Zusatzachse bezeichnet. Ein das Werkstück in eine Achsrichtung bewegender Antrieb wird häufig als Werkstückachse bezeichnet. Mit Achse wird also häufig der in Achsrichtung wirkende Antrieb bezeichnet. Die Zusatzachse kann eine Maschinenachse oder eine Werkstückachse sein. Die Steuerung bzw. Regelung zweier in dieselbe Achsrichtung wirkender Antriebe kann sich jedoch als schwierig herausstellen.

In der EP 1 366 846 A1 wird vorgeschlagen, mit Hilfe eines Computerprogramms die Werkstückbearbeitung zu optimieren, indem anhand der zu bearbeitenden, im Fall einer Laserschneidmaschine zu schneidenden Konturen, bestimmt wird, ob das Portal oder nur der Werkzeughalter bewegt werden soll. Insbesondere soll das Portal dabei so positioniert werden, dass eine maximale Anzahl von Konturen geschnitten werden kann, ohne dass das Portal bewegt werden muss. Der Schneidvorgang soll folglich ausschließlich - wenn möglich - durch die Zusatzachse erfolgen.

Aus der EP 0 594 699 B1 ist es bekannt, durch eine CNC-Steuerung eine Einrichtung mit einem Steuersignal zu speisen. Das Steuersignal gibt die notwendige auszuführende Gesamtbewegung an. Die Einrichtung spaltet das Signal in Bewegungsanteile des Werkzeugträgers (nieder dynamische Achse) und einer zusätzlichen Einrichtung (höher dynamische Achse) auf. Die Aufteilung auf die beiden Bewegungsachsen erfolgt durch ein elektronisches Filter, wobei die Steuersignalanteile für den Werkzeugträger durch einen Tiefpass und die Steuersignalanteile für die zusätzliche Einrichtung durch einen Hochpass erzeugt werden. Nachdem das Steuerungssignal aufgeteilt wurde, erfolgt somit eine unabhängige Steuerung des Antriebs des Werkzeugträgers und des Antriebs der zusätzlichen Einrichtung. Der CNC-Steuerung werden Rückkopplungssignale zugeführt, die die Gesamtbewegung in einer Achsrichtung beschreiben.

Aus der US 5,109,148 ist eine Porsitioniereinrichtung einer Maschine bekannt, die wenigstens zwei voneinander unabhängige Antriebe zur Einstellung einer Relativposition eines Werkstücks zu einem Werkzeug entlang wenigstens einer Richtung aufweist, wobei ein erster Antrieb eine größere Trägheit aufweist als ein zweiter Antrieb. Eine erste Steuereinrichtung steuert den ersten Antrieb in Übereinstimmung mit einem ersten Sollwert für eine Relativposition des Werkstücks in Bezug auf das Werkzeug. Eine zweite Steuereinrichtung steuert den zweiten Antrieb, wobei ein Fehler des ersten Steuersystems als Sollgröße verwendet wird, so dass die Relativposition des Werkstücks in Bezug auf den Sollwert der Relativposition geregelt wird.

Aufgabe der vorliegenden Erfindung ist es, ein Verfahren zum Aufteilen von Bewegungsanteilen bzw. eine Werkzeugmaschine bereit zu stellen, mit denen eine höhere Genauigkeit und größere Dynamik bei der Bearbeitung von Werkstücken erreicht werden können.

Gelöst wird diese Aufgabe durch ein Verfahren mit den Merkmalen des Anspruchs 1. Im Gegensatz zum Stand der Technik, wo im Wesentlichen eine Steuerung durchgeführt wird, wird erfindungsgemäß eine Regelung für den ersten und zweiten Bewegungsanteil durchgeführt. Diese Regelungen sind nicht vollständig unabhängig voneinander. Eine Größe der ersten Achsregelung wird der zweiten Achsregelung zugeführt und dort für die Regelung des zweiten Bewegungsanteils berücksichtigt. Die zweite Achsregelung ist der ersten Achsregelung quasi nachgeordnet. Durch diese Maßnahme lässt sich eine höhere Dynamik und Genauigkeit erreichen. Als Soll-Größe für die Gesamtbewegung kann eine anzufahrende Position, eine Geschwindigkeit oder eine Beschleunigung vorgegeben werden. Die Gesamtbewegung kann in eine oder mehrere Werkzeugbewegungen und eine oder mehrere Werkstückbewegungen in dieselbe Achsrichtung aufgeteilt werden. Es können auch eine oder mehrere Maschinenachsen und eine (Maschinen-) Zusatzachse oder eine oder mehrere Werkstückachsen und eine (Werkstück-) Zusatzachse vorgesehen sein.

In der zweiten Regelstrecke wird die höher dynamischere Achse eingestellt. Somit stellt die höher dynamischere Achse zusätzlich den Schleppabstand der nieder dynamischeren Achse zu. Dies reduziert die Abweichung der mechanisch hintereinander geschalteten Achsen.

Bei einer Verfahrensvariante kann vorgesehen sein, dass aus der Soll-Größe für die Gesamtbewegung eine erste Eingangsgröße für einen Regler der ersten Achsregelung für den ersten Bewegungsanteil ermittelt wird, eine Größe der ersten Achsregelung ermittelt wird und unter Berücksichtigung dieser Größe eine zweite Eingangsgröße für einen Regler der zweiten Achsregelung für den zweiten Bewegungsanteil ermittelt wird. Die Größe der ersten Achsregelung kann damit unmittelbar der zweiten Achsregelung zugeführt werden. In der zweiten Achsregelung kann sie unmittelbar oder nach einer weiteren Bearbeitung und/oder einem Vergleich mit einer anderen Größe dem Regler der zweiten Achsregelung zugeführt werden. Die der zweiten Achsregelung zugeführte Größe kann beispielsweise die Eingangsgröße des Reglers der ersten Achsregelung oder die am Ausgang einer ersten Regelstrecke der ersten Achsregelung ermittelte Ist-Größe sein.

Ein stationär günstiger Arbeitspunkt wird erreicht, wenn in der ersten Achsregelung eine Lageregelung für einen ersten in einer Achsrichtung wirkenden Antrieb und in der zweiten Achsregelung eine Nachlaufregelung für einen zweiten in derselben Achsrichtung wirkenden Antrieb durchgeführt wird.

Bei einer Verfahrensvariante kann vorgesehen sein, dass eine Ist-Größe der Gesamtbewegung ermittelt wird und aus dieser Ist-Größe und der Soll-Größe für die Gesamtbewegung die erste Eingangsgröße ermittelt wird, ein Nachlaufoffset vorgegeben wird und die zweite Eingangsgröße aus dem Nachlaufoffset und der Ist-Größe einer ersten Regelstrecke der ersten Achsregelung ermittelt wird. Die Achsen bzw. Achsantriebe zur Realisierung des ersten und zweiten Bewegungsanteils sind mechanisch hintereinander geschaltet. Als Ist-Größe der Gesamtbewegung wird die Summe der Ist-Größen der ersten und zweiten Regelstrecke der ersten und zweiten Achsregelung verwendet. Die Soll-Größe geht ausschließlich an die erste Achsregelung. Dort wird ein Stellsignal für die höher dynamische Achse (den höher dynamischen Antrieb) ermittelt. In der zweiten Achsregelung wird die Ist-Größe der höher dynamischen Achse als Ist-Wert verwendet und regelt diesen auf einen vorgebbaren Wert (Nachlaufoffset), indem ein Stellsignal für den Antrieb der nieder dynamischeren Achse erzeugt wird.

Der Lagefehler des ersten Antriebs kann reduziert werden, wenn in der ersten und zweiten Achsregelung jeweils eine Lageregelung für einen Achsantrieb durchgeführt wird, wobei durch die zweite Achsregelung der Schleppabstand (Abweichung von Soll-Wert und Ist-Wert) der ersten Achsregelung eingestellt wird.

Bei einer alternativen Verfahrensvariante kann vorgesehen sein, dass die erste Eingangsgröße des Reglers der ersten Achsregelung aus der Soll-Größe für die Gesamtbewegung und der Ist-Größe einer ersten Regelstrecke der ersten Achsregelung ermittelt wird. Die Eingangsgröße des Reglers der ersten Achsregelung ist der Lagefehler in der Regelung der nieder dynamischen Achse. Dieser Lagefehler geht als Lagesollwert an die zweite Achsregelung.

Vorteilhafterweise muss nur jeweils ein Soll-Wert für die gewünschte Gesamtbewegung vorgegeben werden. Die Bewegungsaufteilung in den ersten und zweiten Bewegungsanteil findet ausschließlich in den Achsregelungen statt.

In den Rahmen der Erfindung fällt auch eine Werkzeugmaschine mit den Merkmalen des Anspruchs 5. Mit einer derartigen Werkzeugmaschine können die Bewegungen in Richtung einer Achse nicht nur gesteuert sondern auch geregelt werden. Dadurch entsteht eine höhere Dynamik und Genauigkeit.

Bei einer bevorzugten Ausgestaltung der Erfindung ist vorgesehen, dass durch einen Achsantrieb eine höhere Dynamik realisiert ist als durch den anderen Achsantrieb. Kleine, schnelle Bewegungen können dadurch durch den Achsantrieb mit der höheren Dynamik (Zusatzachse) ausgeführt werden. Insbesondere kann durch den Achsantrieb mit der höheren Dynamik eine Feineinstellung erfolgen, während mit dem anderen Achsantrieb eine Grobeinstellung erfolgen kann. Die Bewegungen der Achsantriebe bzw. die durch diese verursachten Bewegungen können sich überlagern.

Vorzugsweise weist zumindest eine Achsregelung einen Lageregler auf. Mit einem Lageregler kann ein Stellsignal erzeugt werden, welches zur Ansteuerung eines Antriebs, insbesondere einer den Antrieb aufweisenden Regelstrecke, verwendet werden kann.

Um eine Regelung zu ermöglichen ist es vorteilhaft, wenn Messeinrichtungen zur Erfassung der Ist-Größe, insbesondere IstPosition oder Ist-Beschleunigung des Werkzeugs oder Werkstücks, vorgesehen sind. Diese Ist-Größen können für jeden Antrieb erfasst werden, so dass beispielsweise ein Positionswert für die Lage des Portalantriebs und ein Positionswert für die Lage des Werkzeugs bzw. Werkzeughalters vorliegt.

Bei einer vorteilhaften Ausgestaltung der Erfindung kann vorgesehen sein, dass die erste Achsregelung den Lageregler und den höher dynamischen Achsantrieb aufweist, die zweite Achsregelung einen Nachlaufregler aufweist und die Eingangsgröße des Nachlaufreglers aus der erfassten Ist-Größe der ersten Regelstrecke der ersten Achsregelung und einem vorgegebenen Nachlaufoffset ermittelt wird. Durch den Achsantrieb niedrigerer Dynamik kann eine geringe Regelbandbreite realisiert werden. Durch den höher dynamischeren Achsantrieb (Zusatzachse) kann eine größere Regelbandbreite und damit eine größere Genauigkeit realisiert werden. Der höher dynamische Achsantrieb kann nur Bewegungen über relativ kurze Strecken realisieren, dafür kann eine genauere Einstellung erfolgen. Eine Nebenbedingung der Regelung sieht bevorzugt vor, dass die höher dynamische Achse vorzugsweise in einer Mittelstellung (bezogen auf die Werkzeuglänge oder den durch das Werkzeug ausführbaren Hub) gehalten wird.

Bei einer alternativen Ausgestaltung kann vorgesehen sein, dass die erste Achsregelung den Lageregler und den nieder dynamischeren Achsantrieb aufweist und die zweite Achsregelung einen zweiten Lageregler aufweist. Dieses Einstellsystem weist somit ausschließlich Lageregler auf. Ein Nachlaufregler ist nicht vorgesehen. Der Lagefehler in der Regelung der nieder dynamischeren Achse geht als Lage-Sollwert an den Lageregler der höher dynamischeren Achse.

Vorzugsweise ist die Eingangsgröße des Reglers der ersten Achsregelung aus der Soll-Größe und der Ist-Größe der ersten Regelstrecke der ersten Achsregelung gebildet. Besonders bevorzugt ist es, wenn die Einstelleinrichtung eine Anpasseinrichtung aufweist, der die erste Eingangsgröße aus der ersten Achsregelung zugeführt ist.

In der Anpasseinrichtung wird die erste Eingangsgröße mit einem in einer nicht erfindungen Anordnung Anpassfaktor modifiziert.

Ist der Faktor in einer nicht erfindungsgemäßen Anordnung nicht vorhanden (d.h. hat er den Wert 1), dann arbeitet die Regelung wie folgt: die niedriger dynamische Achse kann den Lage-Sollwerten nur bedingt folgen. Dadurch stellt sich ein Schleppabstand in der niedriger dynamischen Achse ein. Dieser Schleppabstand wird als Sollwert in die Achsregelung der höher dynamischen Achse gespeist. Diese Achse kann zwar ihren Sollwerten ebenfalls nur bedingt folgen, aber deutlich besser als die niedriger dynamische Achse. Dadurch verringert die höher dynamische Achse die Abweichungen der niedriger dynamischen Achse. Die höher dynamische Achse kompensiert ausschließlich Fehler der niedriger dynamischen Achse, auch solche Abweichungen, welche durch Störkräfte auf die niedriger dynamische Achse wirken.

Wenn die gekoppelten Achsen Lagerampen mit konstanter Sollgeschwindigkeit fahren, stellt sich in der niedriger dynamischen Achse (erste Achsregelung) im eingeschwungenen Zustand ein konstanter Schleppabstand ein. Diesen kann die höher dynamische Achse (zweite Achsregelung) im eingeschwungenen Zustand komplett kompensieren, d.h. der resultierende Lagefehler der gekoppelten Achsen wird stationär zu Null. Allerdings ergibt sich im Einschwingen ein Schleppabstand der gekoppelten Achsen, welcher abklingt und in seiner Amplitude geringer als der stationäre Schleppabstand der niedriger dynamischen Achse ausfällt. Das bedeutet, dass stationär ein hervorragendes Regelverhalten erreicht wird, und im Einschwingen ein Schwinger geringer Amplitude auftritt.

Betrachtet man das Bahnverhalten z.B. von zwei kartesisch angeordneten Achsen, also in X- und Y-Richtung wirkend, so wirkt sich der vorstehend beschriebene Schwinger im Schleppabstand sehr ungünstig auf die resultierende Bahnbewegung aus. Die Abweichungen können höher liegen, als wenn nur die niedriger dynamische Achse allein betrieben wird, obwohl deren stationäre Lageabweichung höher liegt als bei den gekoppelten Achsen!

Ursache dafür ist, dass ein in etwa einer e-Funktion gehorchender Einschwingvorgang der Lageabweichung der für die Erzeugung von Bahnen eingesetzten Achsen einen sehr geringen Bahnfehler erzielt. Dies gilt unter der Voraussetzung, dass alle an der Bahn beteiligten Achsen eine gleiche Regeldynamik aufweisen.

Weicht der Einschwingvorgang von einer e-Funktion ab, ergibt sich ein deutlich höherer Bahnfehler.

Um die erfindungsgemäße Regelung der Achsen in einem Bahnverbund einsetzen zu können, sind daher folgende Anforderungen zu erfüllen:
· gleiche Regelbandbreite wie die Achse(n) für die anderen Freiheitsgrade der Bahnbewegung
· möglichst einer e-Funktion gehorchendes Einschwingverhalten der gekoppelten Achsen bei Fahren von Lagerampen

Z.B. sei Y-Achse höher dynamisch als die X-Achse. Dann empfiehlt sich, die X-Achse mit einer weiteren, in X-Richtung wirkenden, höher dynamischen Achse X2 zu verbessern. X- und X2-Achse müssen zusammen das gleiche Regelverhalten wie die Y-Achse aufweisen, um geringstmögliche Bahnfehler zu erzielen.

Diese Anpassung geschieht erfindungsgemäß durch einen zwischen Null und Eins liegenden Anpassfaktor vom Schleppabstand der niedriger dynamischen Achse (im Beispiel: X-Achse) auf den Sollwert der höher dynamischen Achse (im Beispiel X2-Achse). Dieser Faktor sorgt dafür, dass die höher dynamische Achse den Lagefehler auch stationär nicht komplett kompensieren kann. Die gekoppelten Achsen wirken bei korrekter Einstellung des Anpassfaktors genau gleich wie die andere(n) Achsen im Bahnverbund (im Beispiel die Y-Achse), sofern diese eine allgemein übliche P-Lageregelung aufweisen.

Der Anpassfaktor senkt letztlich die Wirkung der höher dynamischen Achse auf das für ein gutes Bahnverhalten benötigte Maß herab. Gleichzeitig nimmt der Schwinger in der Lageabweichung der gekoppelten Achsen ab, bzw. er verschwindet ganz.

Damit ist der Anpassfaktor eine gute Möglichkeit, vorstehend angeführte Bedingungen für ein gutes Bahnverhalten zu erfüllen.

Falls in alle Bewegungsrichtungen (also z.B. in X- und in Y-Richtung) gekoppelte Achsen eingesetzt werden sollen (im Beispiel also X- und X2-Achse (= Zusatzachse in X-Richtung), sowie Y- und Y2-Achse (= Zusatzachse in Y-Richtung)), ergibt sich eine optimale Parametrierung, wenn der Anpassfaktor so eingestellt wird, dass der Lagefehler bei Fahren von Lagerampen in einer Bewegungsrichtung gerade noch keinen Überschwinger aufweist. Auch in diesem Fall muss in X- und in Y-Richtung gleiches Regelverhalten hergestellt werden, d.h. die "besseren" Achsen müssen auf die "schlechteren" mittels des beschriebenen Faktors angepasst werden.

Nachfolgend wird die Erfindung anhand den Figuren der Zeichnung näher erläutert.

Dabei zeigen:
- Fig. 1: eine erste Werkzeugmaschine mit entlang zwei Achsrichtungen bewegbarem Werkstück;
- Fig. 2: eine Werkzeugmaschine mit einem in zwei Achsrichtungen bewegbaren Werkzeug;
- Fig. 3: eine Werkzeugmaschine mit fünf Achsrichtungen;
- Fig. 4: eine Werkzeugmaschine mit sechs Achsrichtungen;
- Fig. 5: eine Werkzeugmaschine mit vier Achsrichtungen und bewegbarem Werkstück;
- Fig. 6: eine erste Ausführungsform einer Einstelleinrichtung einer Werkzeugmaschine;
- Fig. 7: eine zweite Ausführungsform einer Einstelleinrichtung einer Werkzeugmaschine.

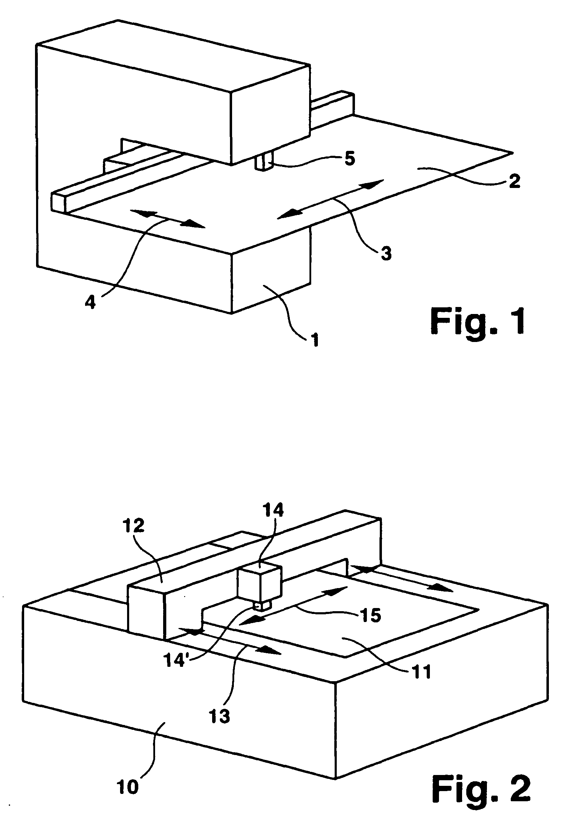

In der Fig. 1 ist eine Werkzeugmaschine 1 dargestellt, bei der ein Werkstück 2 entlang der Achsrichtungen 3, 4 bewegbar ist. Ein Werkzeughalter 5, der ein nicht dargestelltes Werkzeug aufnehmen kann, ist ebenfalls in Achsrichtung 4 bewegbar. Antriebe für das Werkstück, die in die Achsrichtungen 3, 4 wirken, können als Werkstückachsen bezeichnet werden. Der Antrieb des Werkzeughalters 5, der in Achsrichtung 4 wirkt, kann als Maschinenachse bezeichnet werden.

In der Fig. 2 ist eine weitere Werkzeugmaschine 10 dargestellt, bei der das Werkstück 11 ortsfest angeordnet ist. Ein Portal 12 ist entlang der Achsrichtung 13 bewegbar. An dem Portal 12 ist eine Einrichtung 14 angeordnet, an der wiederum ein Werkzeughalter 14' angeordnet ist, der ein Werkzeug halten kann. Die Einrichtung 14 (und damit das Werkzeug) ist in Achsrichtung 15 bewegbar. Der Werkzeughalter 14' ist bezüglich der Einrichtung 14 in Achsrichtung 13 beweglich. Aus der Fig. 2 ist ersichtlich, dass die Einrichtung 14 eine geringere Masse aufweist als das Portal 12. Deshalb können Bewegungen in Achsrichtung 15 schneller durchgeführt werden als Bewegungen des Portals in Achsrichtung 13. Hochdynamische Bewegungen in Achsrichtung 13 können jedoch durch den Werkzeughalter 14' ausgeführt werden.

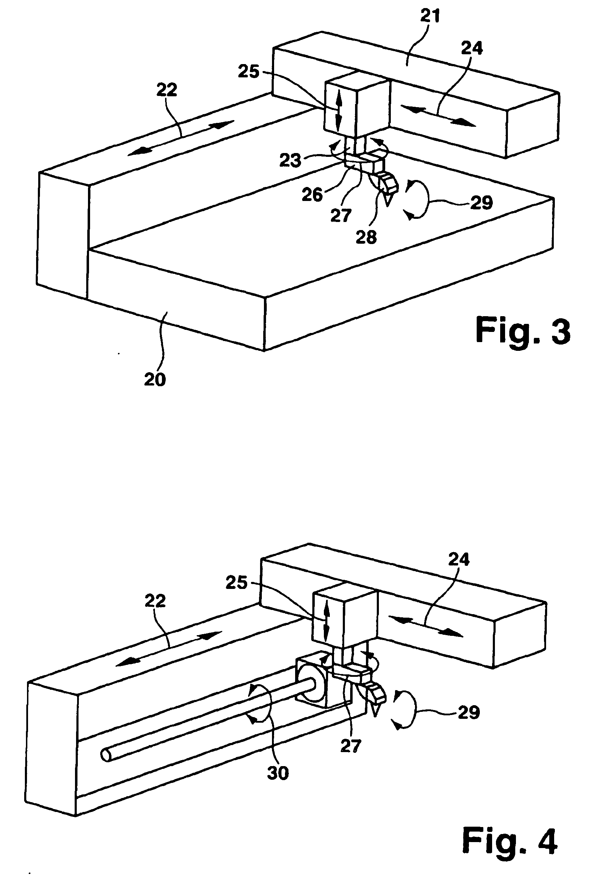

In der Fig. 3 ist eine Werkzeugmaschine 20 dargestellt, bei der ein Arm 21 entlang der Achsrichtung 22 bewegbar ist. Entlang dem Arm 21 ist eine Einrichtung 23 in Achsrichtung 24 bewegbar. Die Einrichtung 23 ist zusätzlich in Achsrichtung 25 bewegbar. Durch die Achsrichtungen 22, 24, 25 werden die X-, Y-, Z-Richtung eines kartesischen Koordinatensystems festgelegt. Ein Ausleger 26 ist in Achsrichtung 27 rotierbar. An dem Ausleger 26 ist ein Laserschneidkopf 28 angeordnet, der wiederum in Achsrichtung 29 rotierbar ist.

Die Darstellung der Fig. 4 ähnelt der der Fig. 3, indem dieselben Achsrichtungen 22, 24, 25, 27, 29 vorgesehen sind. Zusätzlich ist eine Achsrichtung 30 vorgesehen, um die ein Werkstück gedreht werden kann.

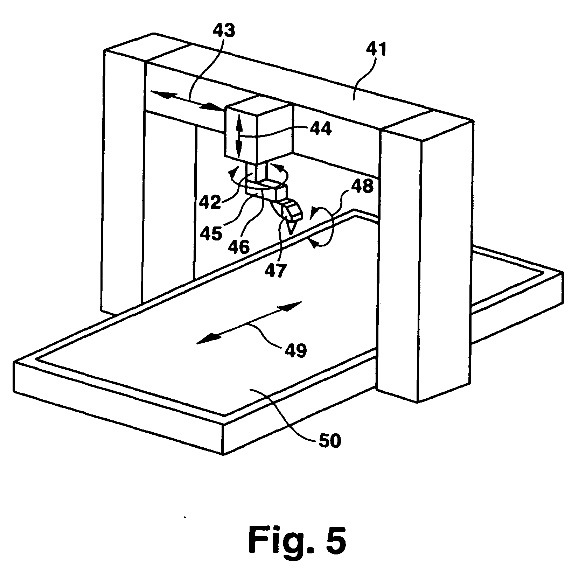

Eine weitere Ausgestaltung einer Werkzeugmaschine ist in der Fig. 5 dargestellt. An einem Portal 41 ist eine Einrichtung 42 in Achsrichtung 43 bewegbar. Die Einrichtung 42 ist wiederum in Achsrichtung 44 höhenverstellbar. Der Ausleger 45 ist in Achsrichtung 46 rotierbar und der Laserschneidkopf 47 ist in Achsrichtung 48 rotierbar. In die Achsrichtungen 43, 44, 46, 48 wirkende Antriebe können als Maschinenachsen bezeichnet werden, während ein in Achsrichtung 49 wirkender Antrieb als Werkstückachse bezeichnet werden kann, da entlang dieser Achse das Werkstück 50 bewegbar ist. Bei einer Werkzeugmaschine nach Art der Erfindung muss bezüglich einer Achsrichtung zumindest eine zweite Verstellmöglichkeit bestehen. In der Fig. 5 könnte dies dadurch realisiert werden, dass das Portal 41 ebenfalls in Achsrichtung 49 bewegbar ist.

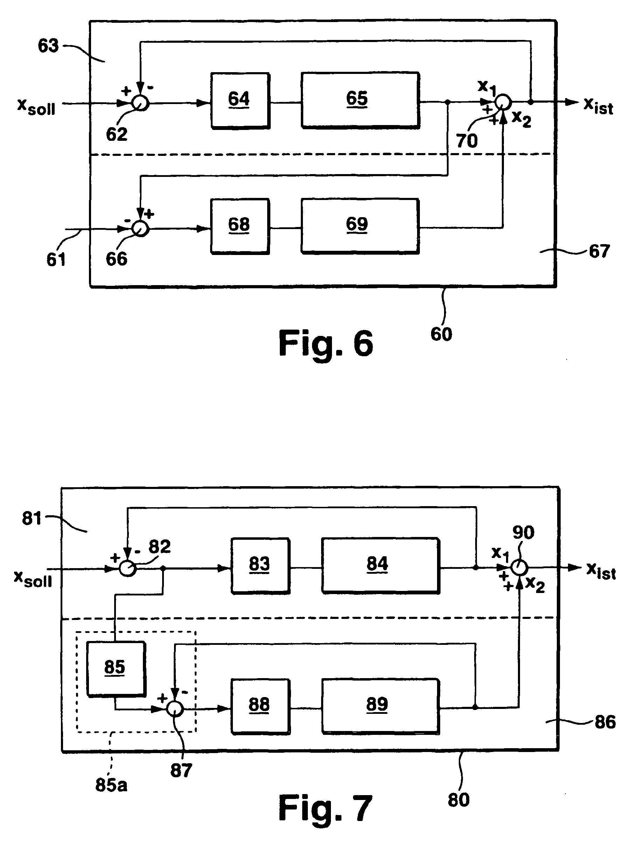

In der Fig. 6 ist eine erste Ausführungsform eines Einstellsystems 60 dargestellt. Dem Einstellsystem 60 ist eine Soll-Größe xₛₒₗₗ zugeführt. Als Ausgangsgröße liegt eine Ist-Größe xᵢₛₜ vor. Als weitere Eingangsgröße weist das Einstellsystem 60 einen Nachlaufoffset an der Stelle 61 auf. Aus den Werten xₛₒₗₗ und xᵢₛₜ wird im Vergleicher 62 einer ersten Achsregelung 63 eine Eingangsgröße für einen Lageregler 64 der ersten Achsregelung 63 ermittelt. Der Lageregler 64 ermittelt ein Stellsignal für eine Regelstrecke 65, die eine hochdynamische Zusatzachse aufweist. Die somit eingestellte Ist-Größe wird durch eine nicht dargestellte Messeinrichtung als Größe x₁ ermittelt. Diese wird auf den Nachlaufoffset 61 geregelt, indem von ihr im Vergleicher 66 der zweiten Achsregelung 67 der Nachlaufoffset 61 subtrahiert wird und das Ergebnis als Eingangsgröße an einen Nachlaufregler 68 der zweiten Achsregelung 67 gegeben wird. Der Nachlaufregler 68 erzeugt ein Stellsignal für eine oder mehrere Maschinen- bzw. Werkstückachsen, die in einer zweiten Regelstrecke 69 angeordnet sind. Am Ausgang der zweiten Achsregelung 67 wird eine Ist-Größe x₂ ermittelt. Diese wird zur Ist-Größe x₁ an der Stelle 70 addiert, woraus sich der Wert xᵢₛₜ ergibt. Dabei ist anzumerken, dass zwei der Größen x₁, x₂, xᵢₛₜ gemessen oder erfasst werden müssen und die dritte Größe daraus ermittelt werden kann. Die Größen x₁, x₂, xᵢₛₜ können beispielsweise aus der Positionsbestimmung der Achsen oder über eine Abstandsmessung, z.B. zwischen Werkstück und Werkzeug, ermittelt werden. Eine solche Abstandsmessung ist für eine Abstandsregelung häufig bei einer Werkzeugmaschine ohnehin implementiert.

Liegt beispielsweise die Achsposition x₁ oberhalb des Nachlaufoffsets 61, erzeugen der Nachlaufregler 68 und die Regelstrecke 69 eine ansteigende Achsposition x₂. Dadurch nimmt die Summe x₁ + x₂ zu. Deshalb reduziert der Lageregler 64 die Achsposition x₁, da er die Summe x₁ + x₂ auf den Sollwert xₛₒₗₗ regelt. Stationär erreicht die Zusatzachse (höher dynamischere Achse) der ersten Regelstrecke 65 somit die durch den Nachlaufoffset 61 vorgegebene Position.

In der Fig. 7 ist eine alternative Ausgestaltung eines Einstellsystems 80 dargestellt. Diesem Einstellsystem 80 ist wiederum ein Soll-Wert xₛₒₗₗ vorgegeben. Am Ausgang liegt der Ist-Wert xᵢₛₜ. Im Gegensatz zum Ausführungsbeispiel der Fig. 6 wird in der ersten Achsregelung 81 eine Eingangsgröße für einen Lageregler 83 ermittelt, indem von der Soll-Größe xₛₒₗₗ die Ist-Größe der ersten Regelstrecke 84 x₁ der ersten Achsregelung 81 im Vergleicher 82 subtrahiert wird. Die erste Achsregelung 81 umfasst den Lageregler 83, der ein Stellsignal für die eine oder mehrere Maschinen- bzw. Werkstückachsen umfassende Regelstrecke 84, in diesem Fall niedrigerer Dynamik, erzeugt. Die Eingangsgröße des Lagereglers 83 entspricht einem Lagefehler in der Regelung der Achse(n) der Regelstrecke 84. Dieser Lagefehler wird an eine Anpasseinrichtung 85, die in einer Ermittlungseinrichtung 85a angeordnet ist, gegeben. In der Anpasseinrichtung 85 wird der Lagefehler mit einem Faktor mit einem Wert zwischen 0 und 1 multipliziert. Im Vergleicher 87 wird vom Ausgang der Anpasseinrichtung 85 die Ist-Größe x₂ am Ausgang der zweiten Regelstrecke 89 subtrahiert. Dadurch wird die zweite Eingangsgröße des Lagereglers 88 der zweiten Achsregelung 86 erzeugt. Der Lageregler 88 ermittelt eine Stellgröße für eine Zusatzachse der Regelstrecke 89, in diesem Fall der höher dynamischeren Achse. An der Stelle 90 werden die Ist-Größen x₁ und x₂ addiert, um den Wert xᵢₛₜ zu erhalten. Geht der Lagefehler der ersten Achsregelung 81 als Soll-Wert in die zweite Achsregelung 86 ein, wird durch die Zusatzachse der Regelstrecke 89 der Schleppabstand der Achse(n) Regelstrecke 84 zugestellt. Dies reduziert die Abweichung der mechanisch hintereinander geschalteten ersten und zweiten Achsen der Regelstrecken 84, 89.

## Patentansprüche

1. Verfahren zur Bewegungsaufteilung einer Relativbewegung zwischen einem Werkstück und einem Werkzeug einer Werkzeugmaschine in Richtung einer Achse auf zumindest einen ersten Bewegungsanteil und einen zweiten Bewegungsanteil, bei dem eine Soll-Größe (Xₛₒₗₗ) für die Gesamtbewegung vorgegeben wird, wobei eine Regelung des ersten Bewegungsanteils in einer ersten Achsregelung (63, 81) und eine Regelung des zweiten Bewegungsanteils in einer zweiten Achsregelung (67, 86) erfolgt, und eine Größe der ersten Achsregelung (63, 81) der zweiten Achsregelung (67, 86) zugeführt wird, eine Ist-Größe (x₂) einer zweiten Regelstrecke (89) der zweiten Achsregelung (86) ermittelt wird, **dadurch gekennzeichnet, dass** die zweite Eingangsgröße des Reglers (88) der zweiten Achsregelung (86) aus der ist-Größe (x₂) der zweiten Regelstrecke (89) und einer zu einer ersten Eingangsgröße des Reglers (83) der ersten Achsregelung (81) proportionalen Größe ermittelt wird, wobei die erste Eingangsgröße des Reglers (83) der ersten Achsregelung (81) mit einem anpassbaren Faktor zwischen
0 und 1 zur Verbesserung des Bahnverhaltens in einem Bahnverbund multipliziert wird.

2. Verfahren nach Anspruch 1, **dadurch gekennzeichnet, dass** die erste Eingangsgröße des Reglers (83) der ersten Achsregelung (81) aus der Soll-Größe (xₛₒₗₗ) für die Gesamtbewegung und der Ist-Größe (x₁) der ersten Regelstrecke (84) der ersten Achsregelung (81) ermittelt wird.

3. Verfahren nach Anspruch 1 oder 2, **dadurch gekennzeichnet, dass** in der ersten und zweiten Achsregelung (81, 86) jeweils eine Lageregelung für einen Achsantrieb (Regelstrecken 84, 89) durchgeführt wird, wobei durch die zweite Achsregelung (86) der Schleppabstand der ersten Achsregelung (81) eingestellt wird.

4. Verfahren nach Anspruch 1, 2 oder 3, **dadurch gekennzeichnet, dass** aus der Soll-Größe (xₛₒₗₗ) für die Gesamtbewegung eine erste Eingangsgröße für einen Regler (64, 83) der ersten Achsregelung (63, 81) für den ersten Bewegungsanteil ermittelt wird, die Größe der ersten Achsregelung (63, 81) ermittelt wird und unter Berücksichtigung dieser Größe eine zweite Eingangsgröße für einen Regler (68, 88) der zweiten Achsregelung (67, 86) für den zweiten Bewegungsanteil ermittelt wird.

5. Werkzeugmaschine mit mindestens einem ersten Achsantrieb zur Bewegung eines Werkzeugs oder eines Werkstücks in einer Achsrichtung und mindestens einem zweiten Achsantrieb zur Bewegung eines Werkzeugs oder eines Werkstücks in Achsrichtung, und einem Einstellsystem (60, 80) zur Einstellung der auf den ersten und zweiten Achsantrieb entfallenden Bewegungsanteile, dem eine Soll-Größe (xₛₒₗₗ) für die Gesamtbewegung in Achsrichtung vorgegeben ist, wobei das Einstellsystem (60, 80) eine erste Achsregelung (63), 81) für den Bewegungsanteil des ersten Achsantriebs und eine zweite Achsregelung (67, 86) für den Bewegungsanteil des zweiten Achsantriebs aufweist, wobei eine Verbindung zwischen der ersten und zweiten Achsregelung (63, 67; 81, 86) besteht, **dadurch gekennzeichnet, dass** die Eingangsgröße des Reglers (83) der ersen Achsregelung (81) einer Ermittlungseinrichtung (85a) zugeführt ist zur Ermittlung der zweiten Eingangsgröße des Reglers (88) der zweiten Achsregelung (86) unter Berücksichtigung der Ist-Größe (x₂) einer zweiten Regelstreckt (89) der zweiten Achsregelung (86), wobei die Ermittlungseinrichtung (85a) eine die Eingangsgröße mit einem anpassbaren Faktor zwischen 0 und 1 zur Verbesserung der Bahnverhaltens in einem Bahnverbund multiplizierende Anpasseinrichtung (85) aufweist, der die erste Eingangsgröße zugeführt ist.

6. Werkzeugmaschine nach Anspruch 5, **dadurch gekennzeichnet, dass** durch einen Achsantrieb eine höhere Dynamik realisierbar ist als mit dem anderen Achsantrieb.

7. Werkzeugmaschine nach Anspruch 5 oder 6, **dadurch gekennzeichnet, dass** zunmindest eine Achsregelung (63, 81, 86) einen Lageregler (64, 83, 88) aufweist.

8. Werkzeugmaschine nach einen der Ansprüche 5 bis 7, **dadurch gekennzeichnet, dass** Messeinrichtungen zur Erfassung der Ist-Größe (x₁, x₂) des Werkzeugs oder Werkstücks vorgesehen sind.

9. Werkzeugmaschine nach einen der vorhergehenden Ansprüche 5 bis 8, **dadurch gekennzeichnet, dass** die erste Achsregelung (81) den Lageregler (83) und den nieder dynamischeren Achsantrieb aufweist und die zweite Achsregelung (86) einen zweiten Lageregler (88) aufweist.

10. Werkzeugmaschine nach Anspruch 9, **dadurch gekennzeichnet, dass** die Eingangsgröße des Lagereglers (83) der ersten Achsregelung (81) aus der Soll-Größe (xₛₒₗₗ) und der Ist-Größe (x₁) der ersten Regelstrecke (84) gebildet ist.

11. Werkzeugmaschine nach einem Ansprüche 5 bis 10, **dadurch gekennzeichnet, dass** die Emittlungseinrichtung (85a) eine Anpasseinrichtung (85) aufweist, der die erste Eingangsgröße zugeführt ist.

## Claims

1. Method for dividing the movement of a relative movement between a workpiece and a tool of a machine tool in the direction of an axis into at least a first movement component and a second movement component, in which a desired quantity (xₛₒₗₗ) for the total movement is specified, wherein closed-loop control of the first movement component takes place in a first closed-loop axis control (63, 81) and closed-loop control of the second movement component takes place in a second closed-loop axis control (67, 86), and a quantity of the first closed-loop axis control (63, 81) is being fed to the second closed-loop axis control (67, 86), wherein an actual quantity (x₂) of a second controlled system (89) of the second closed-loop axis control (86) is determined, **characterised in that** the second input quantity of the controller (88) of the second closed-loop axis control (86) is determined from the actual quantity (x₂) of the second controlled system (89) and a quantity that is proportional to a first input quantity of the controller (83) of the first closed-loop axis control (81), wherein the first input quantity of the controller (83) of the first closed-loop axis control (81) is multiplied with an adjustable factor between 0 and 1 in order to improve the path behaviour in a path combination.

2. Method according to claim 1, **characterised in that** the first input quantity of the controller (83) of the first closed-loop axis control (81) is determined from the desired quantity (xₛₒₗₗ) for the total movement and the actual quantity (x₁) of the first controlled system (84) of the first closed-loop axis control (81).

3. Method according to claim 1 or claim 2, **characterised in that** closed-loop position control for an axis drive (controlled systems 84, 89) is carried out in the first and second closed-loop axis control (81, 86) in each case, the position lag of the first closed-loop axis control (81) being adjusted by the second closed-loop axis control (86).

4. Method according to claim 1, 2 or 3 **characterised in that** a first input quantity for a controller (64, 83) of the first closed-loop axis control (63, 81) for the first movement component is determined from the desired quantity (xₛₒₗₗ) for the total movement, the quantity of the first closed-loop axis control (63, 81) is determined and, taking that quantity into consideration, a second input quantity for a controller (68, 88) of the second closed-loop axis control (67, 86) for the second movement component is determined.

5. Machine tool having at least a first axis drive for moving a tool or a workpiece in an axis direction and at least a second axis drive for moving a tool or a workpiece in the axis direction, and an adjusting system (60, 80) for adjusting the movement components allotted to the first and second axis drive, to which adjusting system (60, 80) a specified desired quantity (xₛₒₗₗ) for the total movement in the axis direction is applied, wherein the adjusting system (60, 80) has a first closed-loop axis control (63, 81) for the movement component of the first axis drive and a second closed-loop axis control (67, 86) for the movement component of the second axis drive, a connection existing between the first and second closed-loop axis control (63, 67; 81, 86), **characterised in that** the input quantity of the position controller (83) of the first closed-loop axis control (81) is fed to a determination device (85a) for determination of the second input quantity of the controller (88) of the second closed-loop axis control (86) taking into consideration the actual quantity (x₂) of a second controlled system (89) of the second closed-loop axis control (86), wherein the determination device (85a) comprises an adaptation device (85) to which the first input quantity is fed for multiplying the input quantity with an adjustable factor between 0 an 1 for improving the path behaviour in a path combination.

6. Machine tool according to claim 5, **characterised in that** higher dynamics may be implemented by one axis drive than by the other axis drive.

7. Machine tool according to claim 5 or 6, **characterised in that** at least one closed-loop axis control (63, 81, 86) has a position controller (64, 83, 88).

8. Machine tool according to any one of claims 5 to 7, **characterised in that** measuring devices are provided for detecting the actual quantity (x₁, x₂) of the tool or workpiece.

9. Machine tool according to any one of claims 5 to 8, **characterised in that** the first closed-loop axis control (81) has the position controller (83) and the lower-dynamics axis drive, and the second closed-loop axis control (86) has a second position controller (88).

10. Machine tool according to claim 9, **characterised in that** the input quantity of the position controller (83) of the first closed-loop axis control (81) is found from the desired quantity (xₛₒₗₗ) and the actual quantity (x₁) of the first controlled system (84).

11. Machine tool according to one of claims 5 to 10, **characterised in that** the determination device (85a) has an adaptation device (85) to which the first input quantity is fed.

## Revendications

1. Procédé pour répartir un mouvement relatif entre une pièce et un outil d'une machine-outil dans la direction d'un axe sur au moins une première composante de mouvement et une deuxième composante de mouvement, selon lequel une grandeur de consigne (xₛₒₗₗ) est prescrite pour le mouvement total, une régulation de la première composante de mouvement ayant lieu dans une première régulation d'axe (63, 81) et une régulation de la deuxième composante de mouvement dans une deuxième régulation d'axe (67, 86), une grandeur de la première régulation d'axe (63, 81) étant amenée à la deuxième régulation d'axe (67, 86) et une grandeur réelle (x₂) d'un deuxième système réglé (89) de la deuxième régulation d'axe (86) étant déterminée, **caractérisé en ce que** la deuxième grandeur d'entrée du régulateur (88) de la deuxième régulation d'axe (86) est déterminée à partir de la grandeur réelle (x₂) du deuxième système réglé (89) et d'une grandeur proportionnelle à une première grandeur d'entrée du régulateur (83) de la première régulation d'axe (81), la première grandeur d'entrée du régulateur (83) de la première régulation d'axe (81) étant multipliée par un facteur adaptable compris entre 0 et 1 pour améliorer le comportement de déplacement sur une trajectoire.

2. Procédé selon la revendication 1, **caractérisé en ce que** la première grandeur d'entrée du régulateur (83) de la première régulation d'axe (81) est déterminée à partir de la grandeur de consigne (xₛₒₗₗ) pour le mouvement total et de la grandeur réelle (x₁) du premier système réglé (84) de la première régulation d'axe (81).

3. Procédé selon la revendication 1 ou 2, **caractérisé en ce qu'**une régulation de position pour un entraînement d'axe (systèmes réglés 84, 89) est respectivement effectuée dans la première et la deuxième régulations d'axe (81, 86), la deuxième régulation d'axe (86) réglant l'écart de poursuite de la première régulation d'axe (81).

4. Procédé selon la revendication 1, 2 ou 3, **caractérisé en ce qu'**une première grandeur d'entrée pour un régulateur (64, 83) de la première régulation d'axe (63, 81) est déterminée pour la première composante de mouvement à partir de la grandeur de consigne (xₛₒₗₗ) pour le mouvement total, la grandeur de la première régulation d'axe (63, 81) est déterminée et, en tenant compte de cette grandeur, une deuxième grandeur d'entrée pour un régulateur (68, 88) de la deuxième régulation d'axe (67, 86) est déterminée pour la deuxième composante de mouvement.

5. Machine-outil avec au moins un premier entraînement d'axe pour déplacer un outil ou une pièce dans une direction d'axe et au moins un deuxième entraînement d'axe pour déplacer un outil ou une pièce dans la direction d'axe, et avec un système de réglage (60, 80) pour régler les composantes de mouvement imputables au premier et au deuxième entraînements d'axe, système pour lequel une grandeur de consigne (xₛₒₗₗ) est prescrite pour le mouvement total dans la direction d'axe, le système de réglage (60, 80) présentant une première régulation d'axe (63, 81) pour la composante de mouvement du premier entraînement d'axe et une deuxième régulation d'axe (67, 86) pour la composante de mouvement du deuxième entraînement d'axe, une liaison existant entre la première et la deuxième régulations d'axe (63, 67 ; 81, 86), **caractérisée en ce que** la grandeur d'entrée du régulateur (83) de la première régulation d'axe (81) est amenée à un équipement de détermination (85a) pour déterminer la deuxième grandeur d'entrée du régulateur (88) de la deuxième régulation d'axe (86) en tenant compte de la grandeur réelle (x₂) d'un deuxième système réglé (89) de la deuxième régulation d'axe (86), l'équipement de détermination (85a) présentant un équipement adaptateur (85) qui multiplie la grandeur d'entrée par un facteur adaptable compris entre 0 et 1 pour améliorer le comportement de déplacement sur une trajectoire et auquel la première grandeur d'entrée est amenée.

6. Machine-outil selon la revendication 5, **caractérisée en ce qu'**il est possible de réaliser avec un entraînement d'axe une plus grande dynamique qu'avec l'autre entraînement d'axe.

7. Machine-outil selon la revendication 5 ou 6, **caractérisée en ce qu'**au moins une régulation d'axe (63, 81, 86) présente un régulateur de position (64, 83, 88).

8. Machine-outil selon l'une des revendications 5 à 7, **caractérisée en ce que** des équipements de mesure sont prévus pour détecter la grandeur réelle (x₁, x₂) de l'outil ou de la pièce.

9. Machine-outil selon l'une des revendications 5 à 8, **caractérisée en ce que** la première régulation d'axe (81) présente le régulateur de position (83) et l'entraînement d'axe moins dynamique, et la deuxième régulation d'axe (86) présente un deuxième régulateur de position (88).

10. Machine-outil selon la revendication 9, **caractérisée en ce que** la grandeur d'entrée du régulateur de position (83) de la première régulation d'axe (81) est formée à partir de la grandeur de consigne (xₛₒₗₗ) et de la grandeur réelle (x₁) du premier système réglé (84).

11. Machine-outil selon l'une des revendications 5 à 10, **caractérisée en ce que** l'équipement de détermination (85a) présente un équipement adaptateur (85) auquel est apportée la première grandeur d'entrée.
